# EUROPEAN PATENT SPECIFICATION

(11) **EP 3 738 879 B1**
(45) Date of publication and mention of the grant of the patent: **14.09.2022**
(21) Application number: 19305622.3
(22) Date of filing: 15.05.2019
(51) Int. Cl.: B64D 11/00

(54) **CATERING TROLLEY RETRIEVAL DEVICE FOR GALLEY COMPARTMENT**
RÜCKHOLVORRICHTUNG FÜR EINEN SERVIERWAGEN FÜR EIN BORDKÜCHENABTEIL
DISPOSITIF DE RETRAIT DE CHARIOT DE RESTAURATION POUR COMPARTIMENT DE CUISINE

(43) Date of publication of application: 18.11.2020
(73) Proprietor: Airbus, 31700 Blagnac (FR)
(72) Inventor: PADDOCK, David, 31700 BLAGNAC (FR)
(74) Representative: Cabinet Le Guen Maillet

(56) References cited:
- EP-A1- 3 437 994
- EP-A2- 2 492 196
- EP-B1- 2 956 361
- US-A1- 2017 166 310

## Description

### TECHNICAL FIELD

The invention relates to the field of aircraft galleys. More precisely, the invention relates to galley compartments for the stowing of multiple catering trolleys, and in particular, to a device enabling easier retrieval of catering trolley within the galley compartment.

### PRIOR ART

Catering trolleys on aircraft are often stowed in galley compartments in the aircraft galley such that they are safely secured and the galley remains tidy. EP3437994 shows a stowage and removal system which has a receiving frame with an insertion opening for insertion and removal of a container including a removal device with a first engagement body which can be brought into engagement with a side of a container and a removal control element which is coupled to the removal device for selectively moving the first engagement body. With several catering trolleys being attributed to each aircraft galley, they are often stowed in the galley compartments designed for stowing multiple catering trolleys, so as to make best use of the minimal space available. Typically, two catering trolleys are stored in such galley compartments, one behind the other.

While retrieving the forward trolley is fairly easy, retrieving the rear trolley can be difficult, and particularly so when full-size trolleys are used. Such trolleys may weigh in the region of 100kg. Aircrew often bend down considerably to reach within the compartment to retrieve the rear trolley. This can put severe strain on their backs. Sometimes, they squat or kneel to retrieve the rear trolley. This may be dangerous as it is not easy to react from such unstable positions should the trolley jolt out of the compartment due to a gust or turbulence.

Further, not being able to comfortably reach the designated handle of the rear trolley, aircrew sometimes grasp the door handle or a side of the trolley. This places a skew load on the catering trolley, which being mounted on castors, occasionally ends up rotating with an edge of the trolley wedging against the compartment wall and jamming the castors during retrieval.

As such, there is clearly a need for a safer and more practical way for retrieving such catering trolleys from galley compartments.

### BRIEF DESCRIPTION OF THE INVENTION

The present invention relates to catering trolley retrieval device for a galley compartment for stowing multiple trolleys, as defined in the independent claim 1.

Preferably, the claw is provided in the middle of the width of the cassette.

More preferably, it further comprises an operating mechanism for the retention latch.

Advantageously, the retention latch is provided in the middle of the width of the cassette.

Preferably, the catering trolley retrieval device comprises a handle at the front end.

The present invention also relates to a galley compartment for stowing multiple trolleys, the compartment comprises a catering trolley retrieval device as described above.

Preferably, the cassette is mounted on guide rails.

The present invention also relates to an aircraft galley having a galley compartment as described above, and a galley work deck provided at the top of the compartment, the cassette being mounted in the galley work deck.

### BRIEF DESCRIPTION OF THE FIGURES

The invention will be better understood when reading the following detailed description and non-limiting examples, as well as studying the figures, wherein:
Figure 1 shows a perspective view of a catering trolley retrieval device in an aircraft galley compartment according to a preferred embodiment of the invention, and
Figures 2A-2D show side views of the aircraft galley compartment, at different stages of trolleys being retrieved with the catering trolley retrieval device of figure 1.

In all of these figures, identical references can designate identical or similar elements. In addition, the various portions shown in the figures are not necessarily shown according to a uniform scale, in order to make the figures more legible.

### DETAILED DESCRIPTION OF PARTICULAR EMBODIMENTS

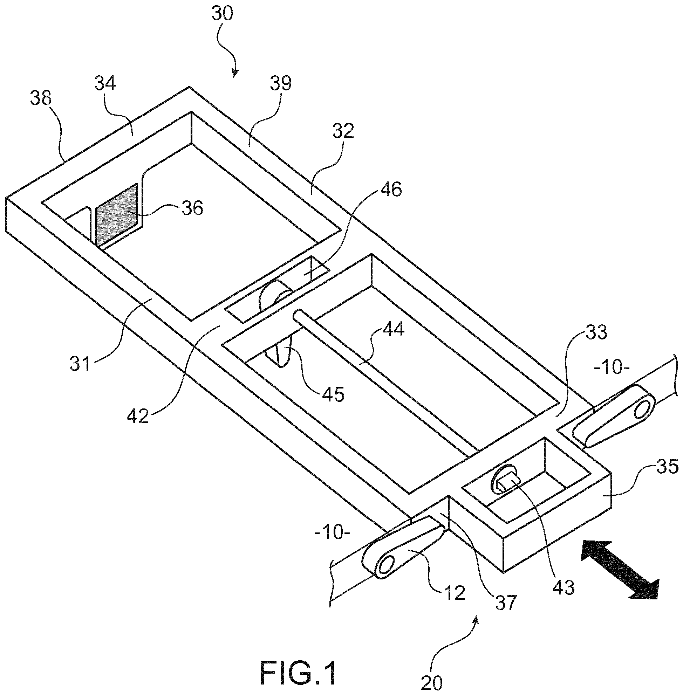

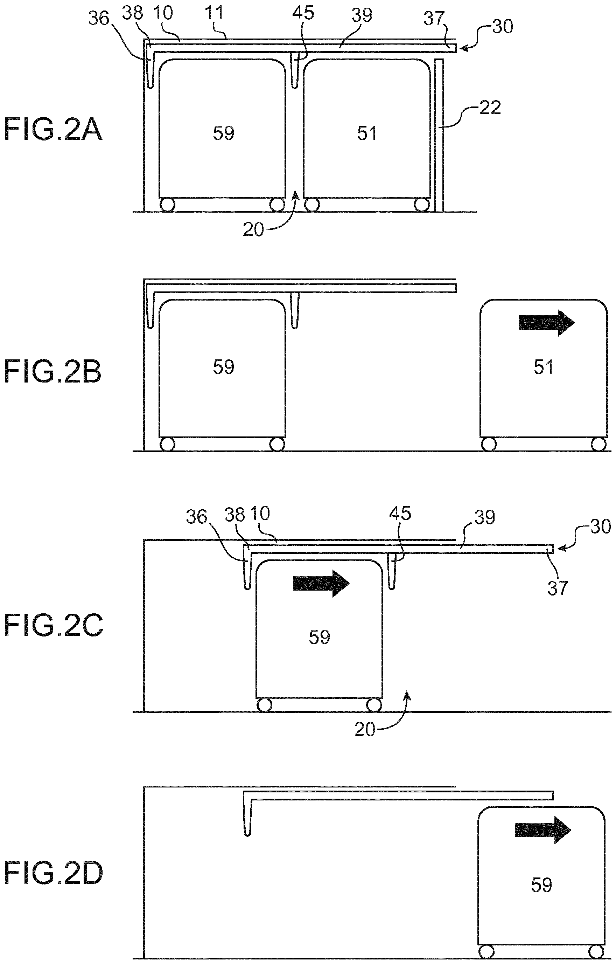

Figure 1 shows a catering trolley retrieval device 30 for a galley compartment 20 for stowing multiple trolleys according to a preferred embodiment of the invention. Meanwhile, figures 2A-2D show different stages of trolleys 51, 59 being retrieved from a galley compartment 20 with the catering trolley retrieval device 30. In this preferred embodiment, the galley compartment 20 is located in a galley of an aircraft, and the retrieval device 30 is designed to mostly reside within the thickness of the galley work deck 10, vaguely similar in construction to a pull-out table. In figure 1, the work surface of the galley work deck 10 has been removed for clarity, while part of its underlying structure has been left visible for context. The galley work deck 10 forms the top of the galley compartment 20, within which the catering trolleys 51, 59 are stowed.

The retrieval device 30 comprises a cassette 39 which is generally rectangular in shape. It extends lengthwise from a front end 37 to a back end 38. It is essentially planar, although it comprises a claw 36 at the back end 38 provided in the middle of the width of the cassette 39. This claw 36 extends downwardly perpendicular to the plane of the cassette 39. An integrated handle 35 is furnished at the front end 37. Here, the cassette 39 is shown as a structure with two longitudinal arms 31, 32 at the sides, two transversal arms 33, 34 at the front end 37 and back end 38, and with large weight-saving holes. However, it will be understood that it may equally be closed, or a substantially solid plate. Preferably, the cassette 39 is a single-piece machined aluminium cassette.

The cassette 39 is mounted on guide rails (not shown) so as to be slidable in the lengthwise direction, which is the same direction the trolleys 51, 59 are stowed in the compartment 20. It is approximately the length of the trolley compartment 20, its front end 37 and back end 38 being located at the front and back of the galley compartment 20 when undeployed. When the cassette 39 is slid out, about a third of its length protrudes from the galley work deck 10. It is disposed above the top of the trolleys, but such that the claw 36 is still able to engage (i.e. come into contact with) the rear trolley 59. To that end, the claw 36 is arranged to extend downward to below the top of the rear trolley 59.

The retrieval device 30 also comprises a retention latch 45 mounted on the cassette 39. Here, it is located on a transversal support bar 42 extending between the two longitudinal arms 31, 32 of the cassette. It is movable between an extended (vertical) position, where it is able to engage the front of the rear trolley 59 within the compartment, and a retracted (horizontal) position where it lies within a slot 46 in the cassette 39. The retention latch 45 has an associated operating mechanism 43, 44. This includes a retention latch knob 43 mounted at the front end 37 of the cassette 39, which operates a rod 44 connected to the retention latch 45. It will be appreciated that parts of the operating mechanism 43, 44, e.g. the rod, may be hidden or arranged differently in the structure of the cassette. Of course, the retention latch 45 and operating mechanism 43, 44 may take other forms.

The distance between the claw 36 and the retention latch 45 corresponds to the length of the rear trolley 59 in the stowage direction. Although standard full-size trolleys are depicted, it will be appreciated that the distance would be adjusted accordingly had they been half-size trolleys (i.e. half the length of the full-size). When the retention latch 45 is lowered, it extends downward to below the top of the rear trolley 59 and so can engage its front. In this way, the rear trolley 59 can be 'caged' between the claw 36 of the cassette 39 and the retention latch 45. The retention latch 45 is ideally provided in the middle of the width of the cassette 39. The cassette 39 may not necessarily be as wide as the compartment, but the retrieval device 30 should be mounted so that the claw 36 and retention latch 45 are located in the middle of the galley compartment 20 so that they are able to apply symmetrical loading to the rear trolley 59 when retrieving and stowing it.

So as to facilitate the understanding of the invention, the operation of the catering trolley retrieval device 30 will now be described. Starting with figure 2A, the forward and rear trolleys 51, 59 are initially stowed in the galley compartment 20 in the front-back direction. The cassette 39 at this point is undeployed, secured in place by ¼-turn fasteners 12 on the galley work deck 10. The compartment door 22 is first opened to reveal the forward trolley 51. This forward trolley 51 is retrieved in the usual manner, as shown in figure 2B. In particular, this can be done from the stable standing up position. The rear trolley 59 is still safely held in place, 'caged' between the claw 36 and the retention latch 45 of the retrieval device 30.

Moving on now to figure 2C, to retrieve the rear trolley 59 from the back of the compartment 20, the ¼-turn fasteners 12 are first rotated to thereby free the cassette 39. The cassette 39 is then drawn out of the galley work deck 10, which can be achieved by pulling on the handle 35. As it slides lengthwise on its guide rails, the claw 36 which is engaged with the back of the rear trolley 59 causes the rear trolley 59 to roll towards the front of the compartment 20, still caged by the cassette 39. With the force pushing symmetrically from the back, the rear trolley 59 will be urged straight towards the front of the compartment 20, with very little tendency to skew left or right. The cassette 39 is drawn out until the rear trolley 59 is at, or near, the front of the compartment 20. Ideally, the cassette 39 will have an end stop corresponding to this position.

Referring finally to figure 2D, in order to remove the trolley 59 from the compartment 20, the retention latch knob 43 operating the retention latch 45 is rotated, which moves the retention latch 45 from the lowered position out of the way into the slot 46. The rear trolley 59, having been brought much further forward from its initial position at the back of the compartment 20, can now be removed just as had been done with the forward trolley 51. The cassette 39 is then pushed back on its guide rails and the compartment door 22 shut.

In order to stow the two trolleys 51, 59, the compartment door 22 is first opened. Next, the cassette 39 is drawn out. The rear trolley 59 is inserted into the compartment until it abuts the claw 36 of the cassette 39. The retention latch knob 43 is then rotated to lower the retention latch 45. This then cages the rear trolley 59. Next, the cassette 39 is pushed back into the galley work deck 10. This causes the rear trolley 59 to roll towards the back of the compartment 20, still caged by the cassette 39. The rear trolley 59 rolls straight, as the retention latch 45 applies a symmetrical load at the front of the rear trolley 59. Once in place, the cassette 39 is secured by rotating the ¼-turn fasteners 12. Now, the forward trolley 51 can be stowed in the galley compartment 20 as is usually done, and the compartment door 22 shut.

The invention offers a safer and more practical way of retrieving catering trolleys 51, 59 from galley compartments 20 stowing multiple trolleys. By enabling the rear trolley 59 to be brought forward towards the front of the galley compartment 20, it reduces the risk of aircrew being injured when retrieving the rear trolley 59. In particular, the rear trolley 59 is more accessible and can be retrieved in the stable standing up position. On top of that, the symmetrical load applied onto the back of the rear trolley 59 ensures that it comes forward smoothly without catching the compartment wall and jamming its castors. Furthermore, the retrieval device 30 helps to retrieve as well as to stow the rear trolley 59, and is advantageously designed so as to be operable with just one hand.

It will be understood that the cassette does not necessarily have to bring the rear trolley to the position as shown in the figures. Such a position may be behind or forward of the shown position, so long as it is still sufficiently easy to be retrieved by aircrew. It will also be understood that the cassette does not need to be mounted inside a galley work deck and merely needs to be mounted above the trolleys.

In light of the disclosure above, it will be appreciated that the invention will be applicable to galley compartments with trolleys of different sizes and/or different number of trolleys in the compartments and/or compartments of different sizes. For example, instead of the two full-size trolleys shown, a full-size trolley and two half-size trolleys may be used. The retrieval device may have another retention latch, mounted on the cassette at a second lengthwise position from the back end of the cassette, as appropriate for the intended order of stowage of the trolleys. The invention can equally be adapted for smaller compartments, e.g. a full-size trolley, and a half-size trolley. Various such combinations are possible.

Needless to say, the invention is not restricted to aircraft and can be employed elsewhere, for example, in a ship galley.

## Claims

1. A catering trolley retrieval device (30) for a galley compartment (20) for stowing multiple trolleys (51, 59), the device (30) comprising a cassette (39) which is rectangular and extending lengthwise from a front end (37) to a back end (38), and arranged to be mounted to the compartment (20) above where the trolleys (51, 59) are to be stowed so as to be slidable lengthwise in the direction of the stowage of the trolleys (51, 59), the cassette (39) further comprising a downwardly-extending claw (36) mounted to the back end (38) of the cassette (39) and extending perpendicular to a plane of the cassette (39), and arranged such that, when the cassette (39) is slid out of the compartment (20), the claw (36) will engage a rear trolley (59) stowed within the compartment (20) to move it forward, the catering trolley retrieval device (30) further comprises a retention latch (45) mounted on the cassette (39) at a first lengthwise position from the back end (38) of the cassette (39), the retention latch (45) movably mounted on the cassette (39), and arranged to extend downward so as to engage the rear trolley (59).

2. A catering trolley retrieval device (30) according to claim 1, **characterised in that** the claw (36) is provided in the middle of the width of the cassette (39).

3. A catering trolley retrieval device (30) according to claim 2, **characterised in that** it further comprises an operating mechanism (43, 44) for the retention latch (45).

4. A catering trolley retrieval device according to claim 2 or 3, **characterised in** the retention latch (45) is provided in the middle of the width of the cassette (39).

5. A catering trolley retrieval device according to any one of the preceding claims, **characterised in that** it comprises a handle (35) at the front end (37).

6. A galley compartment (20) for stowing multiple trolleys (51, 59), **characterised in that** the compartment (20) comprises a catering trolley retrieval device (30) according to any one of the preceding claims.

7. A galley compartment according to claim 6, **characterised in that** the cassette (39) is mounted on guide rails.

8. An aircraft galley having a galley compartment (20) as claimed in claim 6 or 7, and a galley work deck (10) provided at the top of the compartment (20), the cassette (39) being mounted in the galley work deck (10).

## Patentansprüche

1. Cateringwagen-Herausziehvorrichtung (30) für ein Bordküchenabteil (20) zum Verstauen mehrerer Cateringwagen (51, 59), wobei die Vorrichtung (30) eine Kassette (39) umfasst, die rechteckig ist und sich in Längsrichtung von einem vorderen Ende (37) zu einem hinteren Ende (38) erstreckt und dazu angeordnet ist, an dem Abteil (20) oberhalb dem Ort montiert zu werden, wo die Cateringwagen (51, 59) verstaut werden sollen, so dass sie in Längsrichtung in der Verstauungsrichtung der Cateringwagen (51, 59) verschiebbar ist, wobei die Kassette (39) ferner eine sich nach unten erstreckende Klaue (36) umfasst, die an dem hinteren Ende (38) der Kassette (39) montiert ist und sich senkrecht zu einer Ebene der Kassette (39) erstreckt und so angeordnet ist, dass die Klaue (36) einen in dem Abteil (20) verstauten hinteren Cateringwagen (59) in Eingriff nimmt, wenn die Kassette (39) aus dem Abteil (20) geschoben wird, um ihn vorwärts zu bewegen, wobei die Cateringwagen-Herausziehvorrichtung (30) ferner einen Halteriegel (45) umfasst, der an einer ersten Längsposition von dem hinteren Ende (38) der Kassette (39) an der Kassette (39) montiert ist, wobei der Halteriegel (45) beweglich an der Kassette (39) montiert und dazu angeordnet ist, sich nach unten zu erstrecken, um den hinteren Cateringwagen (59) in Eingriff zu nehmen.

2. Cateringwagen-Herausziehvorrichtung (30) nach Anspruch 1, **dadurch gekennzeichnet, dass** die Klaue (36) in der Mitte der Breite der Kassette (39) vorgesehen ist.

3. Cateringwagen-Herausziehvorrichtung (30) nach Anspruch 2, **dadurch gekennzeichnet, dass** sie ferner einen Betätigungsmechanismus (43, 44) für den Halteriegel (45) umfasst.

4. Cateringwagen-Herausziehvorrichtung nach Anspruch 2 oder 3, **dadurch gekennzeichnet, dass** der Halteriegel (45) in der Mitte der Breite der Kassette (39) vorgesehen ist.

5. Cateringwagen-Herausziehvorrichtung nach einem der vorhergehenden Ansprüche, **dadurch gekennzeichnet, dass** sie einen Griff (35) an dem vorderen Ende (37) umfasst.

6. Bordküchenabteil (20) zum Verstauen von mehreren Cateringwagen (51, 59), **dadurch gekennzeichnet, dass** das Abteil (20) eine Cateringwagen-Herausziehvorrichtung (30) nach einem der vorhergehenden Ansprüche umfasst.

7. Bordküchenabteil nach Anspruch 6, **dadurch gekennzeichnet, dass** die Kassette (39) auf Führungsschienen montiert ist.

8. Flugzeugbordküche mit einem Bordküchenabteil (20) nach Anspruch 6 oder 7 und eine an der Oberseite des Abteils (20) vorgesehene Bordküchenarbeitsfläche (10), wobei die Kassette (39) in der Bordküchenarbeitsfläche (10) montiert ist.

## Revendications

1. Dispositif d'extraction de chariot de restauration (30) pour un compartiment d'office (20) pour le rangement de multiples chariots (51, 59), le dispositif (30) comprenant une cassette (39) qui est rectangulaire et s'étendant dans le sens de la longueur d'une extrémité avant (37) à une extrémité arrière (38), et conçue pour être installée sur le compartiment (20) au-dessus de l'endroit où les chariots (51, 59) doivent être rangés de façon à être coulissante dans le sens de la longueur dans la direction de rangement des chariots (51, 59), la cassette (39) comprenant en outre une griffe (36) s'étendant vers le bas fixée à l'extrémité arrière (38) de la cassette (39) et s'étendant perpendiculairement à un plan de la cassette (39), et conçue de telle sorte que, lorsqu'on fait coulisser la cassette (39) hors du compartiment (20), la griffe (36) entre en prise avec un chariot arrière (59) rangé à l'intérieur du compartiment (20) afin de le déplacer vers l'avant, le dispositif d'extraction de chariot de restauration (30) comprenant en outre un verrou de retenue (45) fixé sur la cassette (39) à un premier emplacement dans le sens de la longueur à partir de l'extrémité arrière (38) de la cassette (39), le verrou de retenue (45) étant installé de manière mobile sur la cassette (39), et conçu pour s'étendre vers le bas de façon à entrer en prise avec le chariot arrière (59) .

2. Dispositif d'extraction de chariot de restauration (30) selon la revendication 1, **caractérisé en ce que** la griffe (36) est placée au milieu de la largeur de la cassette (39).

3. Dispositif d'extraction de chariot de restauration (30) selon la revendication 2, **caractérisé en ce qu'**il comprend en outre un mécanisme d'actionnement (43, 44) pour le verrou de retenue (45).

4. Dispositif d'extraction de chariot de restauration selon la revendication 2 ou 3, **caractérisé en ce que** le verrou de retenue (45) est placé au milieu de la largeur de la cassette (39).

5. Dispositif d'extraction de chariot de restauration selon l'une quelconque des revendications précédentes, **caractérisé en ce qu'**il comprend une poignée (35) au niveau de l'extrémité avant (37).

6. Compartiment d'office (20) pour le rangement de multiples chariots (51, 59), **caractérisé en ce que** le compartiment (20) comprend un dispositif d'extraction de chariot de restauration (30) selon l'une quelconque des revendications précédentes.

7. Compartiment d'office selon la revendication 6, **caractérisé en ce que** la cassette (39) est installée sur des rails de guidage.

8. Office d'aéronef comportant un compartiment d'office (20) selon la revendication 6 ou 7, et un plan de travail d'office (10) situé au niveau de la partie supérieure du compartiment (20), la cassette (39) étant installée dans le plan de travail d'office (10).
